(19) Europäisches Patentamt
European Patent Office
Office européen des brevets

(11) **EP 3 659 247 B1**

(12) **EUROPÄISCHE PATENTSCHRIFT**

(45) Veröffentlichungstag und Bekanntmachung des Hinweises auf die Patenterteilung:
**06.10.2021 Patentblatt 2021/40**

(51) Int Cl.:
***H02M 5/458*** *(2006.01)* ***H02M 1/14*** *(2006.01)*

(21) Anmeldenummer: **18759873.5**

(22) Anmeldetag: **13.08.2018**

(86) Internationale Anmeldenummer:
**PCT/EP2018/071882**

(87) Internationale Veröffentlichungsnummer:
**WO 2019/048186 (14.03.2019 Gazette 2019/11)**

(54) **UMRICHTERANORDNUNG**

CONVERTER ASSEMBLY

DISPOSITIF CONVERTISSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.09.2017 DE 102017215598**

(43) Veröffentlichungstag der Anmeldung:
**03.06.2020 Patentblatt 2020/23**

(73) Patentinhaber: **Siemens Mobility GmbH
81739 München (DE)**

(72) Erfinder: **SCHMID, Robert
91336 Heroldsbach (DE)**

(56) Entgegenhaltungen:
**EP-A2- 1 309 075        EP-A2- 1 971 016
JP-A- H06 303 774     JP-A- S62 131 757
US-A- 5 668 708       US-A1- 2007 278 988
US-A1- 2015 280 588**

• **BIN GOU ET AL: "Analysis and compensation of beat phenomenon for railway traction drive system fed with fluctuating DClink voltage", POWER ELECTRONICS AND MOTION CONTROL CONFERENCE (IPEMC), 2012 7TH INTERNATIONAL, IEEE, 2 June 2012 (2012-06-02), pages 654-659, XP032215696, DOI: 10.1109/IPEMC.2012.6258823 ISBN: 978-1-4577-2085-7**

**Beschreibung**

Die Erfindung bezieht sich auf eine Umrichteranordnung mit einem Gleichrichter, der mit einer externen Wechselspannung einer vorgegebenen Speisefrequenz beaufschlagbar ist, einem Wechselrichter und einem Zwischenkreis, der einen Zwischenkreiskondensator umfasst und elektrisch zwischen dem Gleichrichter und dem Wechselrichter angeordnet ist.

Derartige Umrichteranordnungen werden beispielsweise im Bereich der Eisenbahntechnik eingesetzt, wie offenbart im Dokument:

BIN GOU ET AL: "Analysis and compensation of beat phenomenon for railway traction drive system fed with fluctuating DClink voltage", POWER ELECTRONICS AND MOTION CONTROL CONFERENCE (IPEMC), 2012 7TH INTERNATIONAL, IEEE, 2. Juni 2012 (2012-06-02), Seiten 654-659, XP032215696,DOI: 10.1109/IPEMC.2012.6258823ISBN: 978-1-4577-2085-7.

Dort dienen sie dazu, einen einphasigen elektrischen Eingangsstrom eines externen Energieversorgungsnetzes, der beispielsweise über eine Oberleitung oder eine Stromschiene übertragen wird, umzurichten, um ausgangsseitig eine fahrzeugeigene Versorgungsspannung mit fahrzeugseitig gewünschten Eigenschaften, beispielsweise mit Blick auf eine gewünschte Ausgangsfrequenz, eine gewünschte Anzahl an elektrischen Phasen und/oder ein gewünschtes Spannungsniveau, zur Verfügung zu stellen.

Bei der Gleichrichtung tritt das Problem auf, dass viele Gleichrichter ausgangsseitig unter anderem eine - bezogen auf die Speisefrequenz - erste Oberwelle, also eine Störfrequenz mit der doppelten Speisefrequenz, ausgeben, die den Wechselrichter bzw. dessen Ausgangsspannung beeinträchtigen kann.

Der Erfindung liegt die Aufgabe zugrunde, eine Umrichteranordnung anzugeben, bei der der Einfluss von Störfrequenzen reduziert ist.

Diese Aufgabe wird erfindungsgemäß durch eine Umrichteranordnung mit den Merkmalen gemäß Patentanspruch 1 gelöst. Vorteilhafte Ausgestaltungen der erfindungsgemäßen Umrichteranordnung sind in Unteransprüchen angegeben.

Danach ist erfindungsgemäß vorgesehen, dass elektrisch parallel zu dem Zwischenkreiskondensator ein Saugkreis geschaltet ist, der Saugkreis bei einer Serienresonanzfrequenz, die dem Doppelten der Speisefrequenz entspricht, einen Serienresonanzkreis bildet und niederimpedant ist, der Saugkreis gemeinsam mit dem Zwischenkreiskondensator bei einer Parallelresonanzfrequenz einen Parallelresonanzkreis bildet und hochimpedant ist, elektrisch parallel zu dem Zwischenkreiskondensator und dem Saugkreis ein Dämpfersaugkreis geschaltet ist, der einen ohmschen Widerstand umfasst und mit dem Saugkreis magnetisch gekoppelt ist, und die an dem Saugkreis bei der Parallelresonanzfrequenz abfallende Spannung durch die magnetische Kopplung auf den Dämpfersaugkreis transformiert wird und dadurch der Widerstand des Dämpfersaugkreises die Parallelresonanz des Saugkreises dämpft.

Ein wesentlicher Vorteil der erfindungsgemäßen Umrichteranordnung ist darin zu sehen, dass die von dem Saugkreis, der primär zur Unterdrückung der von dem Gleichrichter erzeugten ersten Oberwelle dient, hervorgerufene Parallelresonanz durch den erfindungsgemäß zusätzlich vorgesehenen Dämpfersaugkreis gedämpft wird, so dass der negative Einfluss der Parallelresonanz auf das elektrische Verhalten der Umrichteranordnung minimiert wird.

Ein weiterer wesentlicher Vorteil der erfindungsgemäßen Umrichteranordnung ist darin zu sehen, dass die Kapazität des Saugkreises unabhängig von der Parallelresonanz gewählt werden kann, weil deren Einfluss durch den Dämpfersaugkreis minimiert wird.

Mit Blick auf eine geringe Bauelementanzahl wird es als vorteilhaft angesehen, wenn der Saugkreis durch eine erste Reihenschaltung gebildet ist, die eine Drossel und eine Kapazität, nachfolgend erste Kapazität genannt, umfasst, die Drossel, die erste Kapazität und der Zwischenkreiskondensator den Parallelresonanzkreis bilden, elektrisch parallel zu dem Zwischenkreiskondensator und der ersten Reihenschaltung eine zweite Reihenschaltung geschaltet ist, die den Dämpfersaugkreis bildet und eine Wicklung, einen Widerstand und eine Kapazität, nachfolgend zweite Kapazität genannt, umfasst, die Wicklung der zweiten Reihenschaltung mit der Drossel der ersten Reihenschaltung magnetisch gekoppelt ist und die an der Drossel bei der Parallelresonanzfrequenz abfallende Spannung durch die Wicklung auf die zweite Reihenschaltung transformiert wird.

Die zweite Kapazität beträgt vorzugsweise zwischen dem 0,1-fachen und dem zehnfachen der ersten Kapazität, besonders bevorzugt zwischen dem 0,5-fachen und dem 1,5-fachen der ersten Kapazität.

Der Widerstand der zweiten Reihenschaltung ist vorzugsweise derart bemessen, dass gilt:

$$0{,}8 \cdot \frac{1}{j \cdot 2\pi \cdot fs \cdot C1} < R < 10 \cdot \frac{1}{j \cdot 2\pi \cdot fs \cdot C1}$$

wobei R den Widerstand der zweiten Reihenschaltung, C1 die erste Kapazität und fs die Speisefrequenz bezeichnet.

Die Induktivität der Wicklung der zweiten Reihenschaltung beträgt vorzugsweise zwischen dem 0,1-fachen und dem 0,5-fachen der Drosselinduktivität der Drossel der ersten Reihenschaltung.

Die Koppelinduktivität M zwischen der Wicklung der zweiten Reihenschaltung und der Drossel der ersten Reihenschaltung liegt vorzugsweise zwischen dem 0,1-fachen und dem 0,7-fachen der Induktivität der Wicklung.

Die Wicklungszahl der Wicklung beträgt vorzugsweise zwischen 5 und 50.

Die Erfindung bezieht sich darüber hinaus auf ein Fahrzeug, insbesondere ein Schienenfahrzeug oder ein elektrisch betriebenes Straßenfahrzeug. Erfindungsgemäß ist das Fahrzeug mit einer Umrichteranordnung ausgestattet, wie sie oben beschrieben worden ist.

Die Erfindung wird nachfolgend anhand von Ausführungsbeispielen näher erläutert; dabei zeigen beispielhaft

FIG 1    ein Ausführungsbeispiel für ein erfindungsgemäßes Schienenfahrzeug, das mit einem Ausführungsbeispiel für eine erfindungsgemäße Umrichteranordnung ausgestattet ist,

FIG 2    ein Ausführungsbeispiel für einen Zwischenkreis für die Umrichteranordnung gemäß FIG 1 näher im Detail, und

FIG 3    den Impedanzverlauf des Zwischenkreises bei dem Ausführungsbeispiel gemäß FIG 2.

In den Figuren werden der Übersicht halber für identische oder vergleichbare Komponenten stets dieselben Bezugszeichen verwendet.

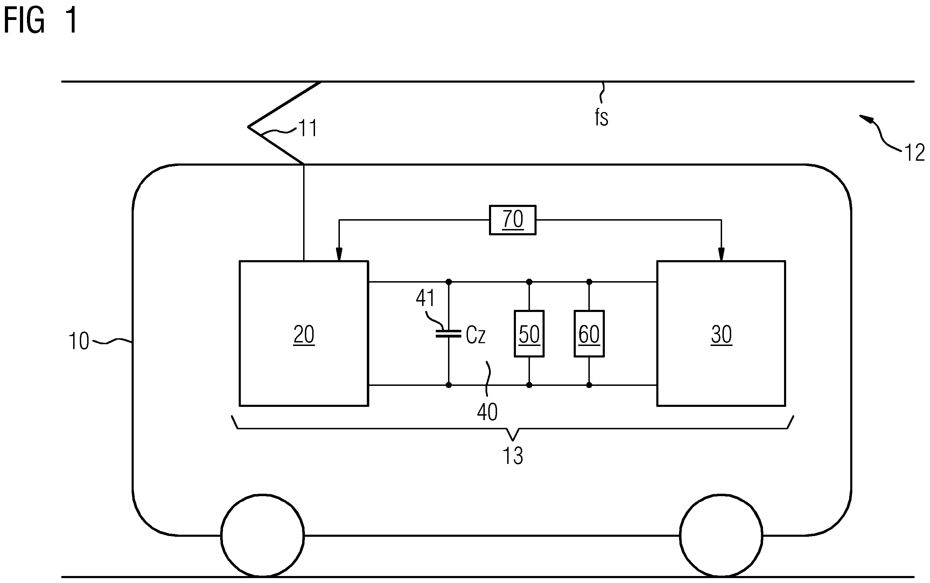

Die FIG 1 zeigt ein Schienenfahrzeug 10, das über einen Pantografen 11 mit einem externen Energieversorgungsnetz 12 in Verbindung steht. Das externe Energieversorgungsnetz 12 stellt eine Wechselspannung mit einer vorgegebenen Speisefrequenz fs von beispielsweise 50 Hz oder 16 2/3 Hz zur Verfügung.

Das Schienenfahrzeug 10 weist einen Gleichrichter 20 auf, der mit dem Pantografen 11 und damit mit dem externen Energieversorgungsnetz 12 gekoppelt ist. Dem Gleichrichter 20 ist ein Wechselrichter 30 nachgeordnet, der derart angesteuert wird, dass er ausgangsseitig eine ein- oder mehrphasige Wechselspannung mit gewünschter Ausgangsfrequenz erzeugt.

Zwischen dem Gleichrichter 20 und dem Wechselrichter 30 befindet sich ein elektrischer Zwischenkreis 40, der einen Zwischenkreiskondensator 41 mit einer Kapazität Cz, einen parallel geschalteten Saugkreis 50 sowie einen parallel geschalteten Dämpfersaugkreis 60 umfasst. Der Saugkreis 50 und der Dämpfersaugkreis 60 sind induktiv miteinander gekoppelt.

Der Gleichrichter 20, der Wechselrichter 30 und der den Zwischenkreiskondensator 41, den Saugkreis 50 und den Dämpfersaugkreis 60 umfassende elektrische Zwischenkreis 40 bilden eine Umrichteranordnung 13, bei der der Gleichrichter 20 und der Wechselrichter 30 von einer umrichteranordnungseigenen Steuereinrichtung 70 oder einer externen Steuereinrichtung in einem Pulsbetrieb angesteuert werden kann und einen Pulsrichter bildet.

Der Saugkreis 50 weist bei einer Serienresonanzfrequenz, die dem Doppelten der Speisefrequenz fs des externen Energieversorgungsnetzes 12 entspricht, eine Serienresonanz auf. Im Falle einer Speisefrequenz fs von 16 2/3 Hz beträgt die Serienresonanzfrequenz also 33 1/3 Hz, im Falle einer Speisefrequenz fs von 50 Hz beträgt sie 100 Hz.

Bei der Serienresonanz bzw. bei der doppelten Speisefrequenz fs wird der Saugkreis 50 niederimpedant, so dass die von dem Gleichrichter 20 beim Gleichrichten erzeugte erste Oberwelle, die die doppelte Speisefrequenz fs aufweist, im Zwischenkreis 40 kurzgeschlossen wird.

Der Saugkreis 50 bildet mit dem Zwischenkreiskondensator 41 darüber hinaus einen Parallelresonanzkreis, dessen Parallelresonanzfrequenz größer als die Serienresonanzfrequenz ist bzw. das Doppelte der Speisefrequenz übersteigt. Bei der Parallelresonanzfrequenz ist der Saugkreis 50 hochimpedant.

Die Parallelresonanz des Saugkreises 50 wird durch den Dämpfersaugkreis 60 gedämpft. Zu diesem Zweck weist der Dämpfersaugkreis 60 vorzugsweise zumindest einen ohmschen Widerstand auf, der über eine magnetische bzw. induktive Kopplung mit dem Saugkreis 50 zusammenwirkt und für die Parallelresonanz eine Dämpfung bewirkt.

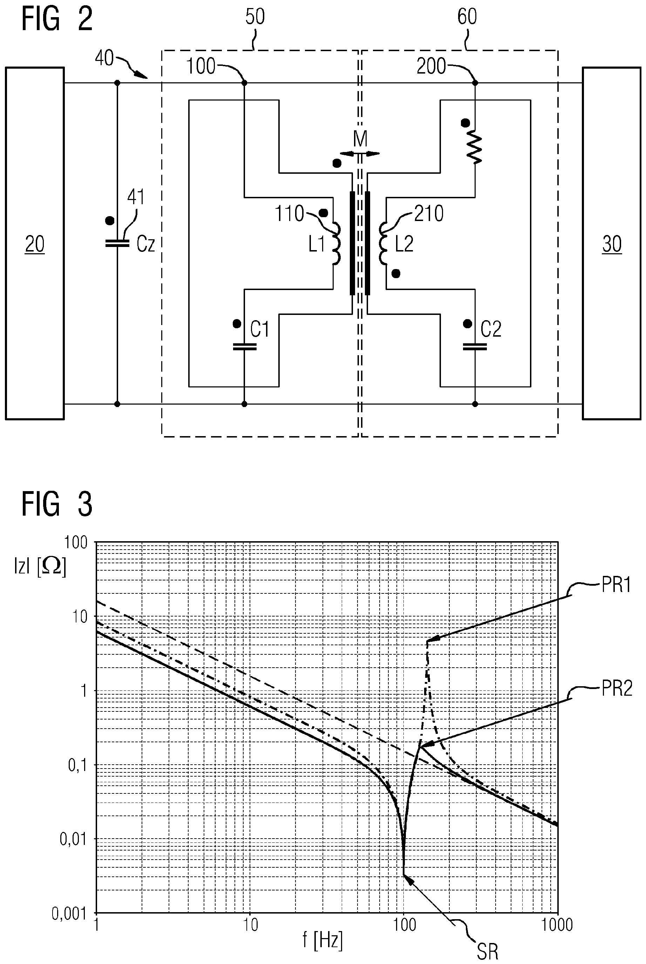

Die FIG 2 zeigt ein Ausführungsbeispiel für den Zwischenkreis 40 gemäß FIG 1 näher im Detail. Man erkennt den Zwischenkreiskondensator 41, den parallel geschalteten Saugkreis 50 und den Dämpfersaugkreis 60.

Bei dem Ausführungsbeispiel gemäß Figur 2 ist der Saugkreis 50 durch eine Reihenschaltung, nachfolgend erste Reihenschaltung 100 genannt, gebildet, die eine Drossel 110 und eine Kapazität C1, nachfolgend erste Kapazität genannt, umfasst.

Die Induktivität L1 der Drossel 110 und die Kapazität C1 sind derart bemessen, dass die erste Reihenschaltung 100 bei der doppelten Speisefrequenz fs niederohmig wird. Dies ist der Fall, wenn gilt:

$$f1 = \frac{1}{2 \cdot \pi \cdot \sqrt{L1 \cdot C1}} = 2 \cdot fs$$

wobei f1 die Serienresonanzfrequenz der ersten Reihenschaltung 100 bzw. des Saugkreises 50 und fs die Speisefrequenz des externen Energieversorgungsnetzes 12 bezeichnet.

Die von dem Gleichrichter 20 beim Gleichrichten erzeugte erste Oberwelle, deren Frequenz das Doppelte der Speisefrequenz f1 beträgt, wird durch den Saugkreis 50 somit kurzgeschlossen.

Der Dämpfersaugkreis 60 wird bei dem Ausführungsbeispiel gemäß FIG 2 durch eine Reihenschaltung, nachfolgend zweite Reihenschaltung 200 genannt, gebildet, die einen ohmschen Widerstand R, eine Wicklung 210 und eine Kapazität C2, nachfolgend zweite Kapazität genannt, umfasst. Die Wicklung 210 der zweiten Reihenschaltung 200 bzw. des Dämpfersaugkreises 60 ist mit der Drossel 110 der ersten Reihenschaltung bzw. des Saugkreises 50 magnetisch gekoppelt; die Koppelinduktivität ist mit dem Bezugzeichen M gekennzeichnet.

Für die Parallelresonanzfrequenz des Saugkreises 50 wird die erste Reihenschaltung 100 hochimpedant, so dass die an der Drossel 110 abfallende Spannung durch die Wicklung 210 auf die zweite Reihenschaltung 200 und damit in den Dämpfersaugkreis 60 transformiert wird, wodurch wiederum der Widerstand R des Dämpfersaugkreises 60 die Parallelresonanz des Saugkreises 50 dämpft.

Die Parallelresonanzfrequenz f2 ergibt sich aus der Induktivität L1 der Drossel 110, der ersten Kapazität C1 und der Kapazität Cz des Zwischenkreiskondensators 41 wie folgt:

$$f2 = \frac{1}{2 \cdot \pi \cdot \sqrt{L1 \cdot \dfrac{C1 \cdot Cz}{C1 + Cz}}}$$

Für die Komponenten des Dämpfersaugkreises 60 werden folgende Dimensionierungsbereiche als vorteilhaft angesehen:

Für die zweite Kapazität C2 gilt vorzugsweise:

$$0{,}5 \cdot C1 \leq C2 \leq 1{,}5 \cdot C1$$

Die Kapazität C2 dient primär zum Blocken von Gleichstrom durch den Dämpfersaugkreis 60.

Für den ohmschen Widerstand R gilt vorzugsweise:

$$0{,}8 \cdot \frac{1}{j \cdot 2\pi \cdot f \cdot C1} < R < 10 \cdot \frac{1}{j \cdot 2\pi \cdot f \cdot C1}$$

Für die Induktivität der Wicklung 210 gilt vorzugsweise:

$$0{,}5 \cdot L1 \leq L2 \leq 0{,}8 \cdot L1$$

wobei L1 die Induktivität der Drossel 110 und L2 die Induktivität L2 der Wicklung 210 bezeichnet.

Für die magnetische Kopplung zwischen der Drossel 11 und der Wicklung 210 gilt vorzugsweise:

$$0{,}1 \cdot L2 \leq M \leq 0{,}7 \cdot L2$$

wobei M die Koppelinduktivität zwischen der Drossel 110 und der Wicklung 210 bezeichnet.

Die FIG 3 zeigt beispielhaft den Impedanzverlauf eines Zwischenkreises 40, der für eine Speisefrequenz von 50 Hz ausgelegt ist und bei dem demgemäß der Saugkreis 50 für eine Serienresonanz von 100 Hz niederimpedant ist (siehe Pfeil mit dem Bezugzeichen SR). Es lässt sich erkennen, dass bei der doppelten Speisefrequenz, hier also bei 100 Hz, die Impedanz des Zwischenkreises 40 minimal wird.

Die FIG 3 zeigt darüber hinaus, dass bei Auftreten der Parallelresonanz (siehe Pfeil mit dem Bezugzeichen PR1) die Impedanz des Zwischenkreises 40 sehr groß wird. Um diesen Effekt zu reduzieren bzw. die Parallelresonanz zu dämpfen, ist der erläuterte Dämpfersaugkreis 60 vorgesehen, dessen Widerstand R über die magnetische bzw.

induktive Kopplung auf den Saugkreis 50 einwirkt und bei Auftreten der Parallelresonanz deren Höhe dämpft (siehe Pfeil mit dem Bezugszeichen PR2).

Zusammengefasst arbeitet die oben beispielhaft beschriebene Umrichteranordnung 13 also wie folgt:

Bei kleinen Frequenzen $f < f1 = \dfrac{1}{2 \cdot \pi \cdot \sqrt{L1 \cdot C1}}$ spielen Spannungsab-fälle an den Induktivitäten L1 und L2 bzw. der Drossel 110 und der Wicklung 210 keine signifikante Rolle; die Kapazitäten Cz, C1 und C2 sind parallel geschaltet.

Für die Parallelresonanzfrequenz $f2 = \dfrac{1}{2 \cdot \pi \cdot \sqrt{L1 \cdot \dfrac{C1 \cdot Cz}{C1 + Cz}}}$ sind der Saugkreis 50 und der Dämpfersaugkreis 60 in Resonanz. An der Drossel 110 fällt eine sehr hohe Spannung ab, die auf die Wicklung 210 transformiert wird. Aufgrund der Polarität der Verschaltung fließt nun ein Strom durch den Widerstand R, der elektrische Verluste erzeugt und die Parallelresonanz dämpft.

Für hohe Frequenzen $f > f2 = \dfrac{1}{2 \cdot \pi \cdot \sqrt{L1 \cdot \dfrac{C1 \cdot Cz}{C1 + Cz}}}$ ist die Impedanz des Zwischenkreiskondensators 41 deutlich kleiner als der Widerstand R. Der Saugkreis 50 ist induktiv. Es wirkt also der Zwischenkreiskondensator 41 im Wesentlichen alleine.

Die oben beispielhaft beschriebene Umrichteranordnung 13 kann eine, mehrere oder alle der folgenden Vorteile aufweisen:

- Es ist nicht nötig, die Performance des Wechselrichters 30 durch die zusätzliche Aufgabe des aktiven Ausregelns von Zwischenkreisoszillationen zu beschneiden.
- Sporadisch auftretende Anregungen des Zwischenkreises 40 werden in der Regel nicht zu gefährlich hohen Zwischenkreisspannungen führen.
- Durch den Wegfall der unerwünscht hohen Impedanz bei der Parallelresonanzfrequenz f2 können Netzrückwirkungen deutlich reduziert werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Umrichteranordnung (13) mit

  - einem Gleichrichter (20), der mit einer externen Wechselspannung einer vorgegebenen Speisefrequenz (fs) beaufschlagbar ist,
  - einem Wechselrichter (30) und
  - einem Zwischenkreis (40), der einen Zwischenkreiskondensator (41) umfasst und elektrisch zwischen dem Gleichrichter (20) und dem Wechselrichter (30) angeordnet ist, wobei
  - elektrisch parallel zu dem Zwischenkreiskondensator (41) ein Saugkreis (50) geschaltet ist,
  - der Saugkreis (50) bei einer Serienresonanzfrequenz, die dem Doppelten der Speisefrequenz (fs) entspricht, einen Serienresonanzkreis bildet und niederimpedant ist,
  - der Saugkreis (50) gemeinsam mit dem Zwischenkreiskondensator (41) bei einer Parallelresonanzfrequenz einen Parallelresonanzkreis bildet und hochimpedant ist,
  - der Saugkreis (50) durch eine erste Reihenschaltung gebildet ist, die eine Drossel (110) und eine Kapazität (C1), nachfolgend erste Kapazität genannt, umfasst,
  - die Drossel (110), die erste Kapazität (C1) und der Zwischenkreiskondensator (41) den Parallelresonanzkreis bilden, **dadurch gekennzeichnet, dass:**
  - elektrisch parallel zu dem Zwischenkreiskondensator (41) und dem Saugkreis (50) ein Dämpfersaugkreis (60) geschaltet ist, der einen ohmschen Widerstand (R) umfasst und mit dem Saugkreis (50) magnetisch gekoppelt ist, und

- die an dem Saugkreis (50) bei der Parallelresonanzfrequenz abfallende Spannung durch die magnetische Kopplung auf den Dämpfersaugkreis (60) transformiert wird und dadurch der Widerstand (R) des Dämpfersaugkreises (60) die Parallelresonanz des Saugkreises dämpft,

- elektrisch parallel zu dem Zwischenkreiskondensator (41) und der ersten Reihenschaltung (100) eine zweite Reihenschaltung (200) geschaltet ist, die den Dämpfersaugkreis (60) bildet und eine Wicklung (210), einen Widerstand (R)

- und eine Kapazität, nachfolgend zweite Kapazität (C2) genannt, umfasst,

- die Wicklung (210) der zweiten Reihenschaltung (200) mit der Drossel (110) der ersten Reihenschaltung (100) magnetisch gekoppelt ist und

- die an der Drossel (110) bei der Parallelresonanzfrequenz abfallende Spannung durch die Wicklung (210) auf die zweite Reihenschaltung (200) transformiert wird.

2. Umrichteranordnung (13) nach einem der voranstehenden Ansprüche,
**dadurch gekennzeichnet, dass** die zweite Kapazität (C2) zwischen dem 0,1-fachen und dem zehnfachen der ersten Kapazität (C1) beträgt.

3. Umrichteranordnung (13) nach einem der voranstehenden Ansprüche,
**dadurch gekennzeichnet, dass** die zweite Kapazität (C2) zwischen dem 0,5-fachen und dem 1,5-fachen der ersten Kapazität (C1) beträgt.

4. Umrichteranordnung (13) nach einem der voranstehenden Ansprüche,
**dadurch gekennzeichnet, dass** der Widerstand (R) der zweiten Reihenschaltung (200) derart bemessen ist, dass gilt:

$$0{,}8 \cdot \frac{1}{j \cdot 2\pi \cdot fs \cdot C1} < R < 10 \cdot \frac{1}{j \cdot 2\pi \cdot fs \cdot C1}$$

wobei R den Widerstand der zweiten Reihenschaltung (200), C1 die erste Kapazität und fs die Speisefrequenz bezeichnet.

5. Umrichteranordnung (13) nach einem der voranstehenden Ansprüche,
**dadurch gekennzeichnet, dass** die Induktivität (L2) der Wicklung (210) der zweiten Reihenschaltung (200) zwischen dem 0,1-fachen und dem 0,5-fachen der Drosselinduktivität (L1) der Drossel (110) der ersten Reihenschaltung (100) beträgt.

6. Umrichteranordnung (13) nach einem der voranstehenden Ansprüche,
**dadurch gekennzeichnet, dass** die Koppelinduktivität M zwischen der Wicklung (210) der zweiten Reihenschaltung (200) und der Drossel (110) der ersten Reihenschaltung (100) zwischen dem 0,1-fachen und dem 0,7-fachen der Induktivität der Wicklung beträgt.

7. Umrichteranordnung (13) nach einem der voranstehenden Ansprüche,
**dadurch gekennzeichnet, dass** die Wicklungszahl der Wicklung (210) zwischen 5 und 50 beträgt.

8. Fahrzeug, insbesondere Schienenfahrzeug oder Straßenfahrzeug,
**dadurch gekennzeichnet, dass** das Fahrzeug eine Umrichteranordnung (13) nach einem der voranstehenden Ansprüche aufweist.

**Claims**

1. Converter arrangement (13) having

- a rectifier (20), to which an external AC voltage of a predefined supply frequency (fs) can be applied,
- an inverter (30), and
- an intermediate circuit (40) which comprises an intermediate circuit capacitor (41) and is electrically arranged between the rectifier (20) and the inverter (30),

wherein

- an absorption circuit (50) is connected electrically in parallel with the intermediate circuit capacitor (41),
- the absorption circuit (50) forms a series resonant circuit and has a low impedance at a series resonant frequency corresponding to twice the supply frequency (fs),
- the absorption circuit (50), together with the intermediate circuit capacitor (41), forms a parallel resonant circuit and has a high impedance at a parallel resonant frequency,
- the absorption circuit (50) is formed by a first series circuit comprising an inductor (110) and a capacitance (C1), called first capacitance below,
- the inductor (110), the first capacitance (C1) and the intermediate circuit capacitor (41) form the parallel resonant circuit,

**characterized in that:**

- a damping absorption circuit (60) is connected electrically in parallel with the intermediate circuit capacitor (41) and the absorption circuit (50), comprises a non-reactive resistor (R) and is magnetically coupled to the absorption circuit (50), and
- the voltage dropped across the absorption circuit (50) at the parallel resonant frequency is transformed by the magnetic coupling to the damping absorption circuit (60), and the resistor (R) of the damping absorption circuit (60) thereby damps the parallel resonance of the absorption circuit,
- a second series circuit (200) is connected electrically in parallel with the intermediate circuit capacitor (41) and the first series circuit (100), which second series circuit (200) forms the damping absorption circuit (60) and comprises a winding (210), a resistor (R) and a capacitance, called second capacitance (C2) below,
- the winding (210) of the second series circuit (200) is magnetically coupled to the inductor (110) of the first series circuit (100), and
- the voltage dropped across the inductor (110) at the parallel resonant frequency is transformed by the winding (210) to the second series circuit (200).

2.  Converter arrangement (13) according to the preceding claim,
    **characterized in that**
    the second capacitance (C2) is between 0.1 and ten times the first capacitance (C1).

3.  Converter arrangement (13) according to one of the preceding claims,
    **characterized in that**
    the second capacitance (C2) is between 0.5 and 1.5 times the first capacitance (C1).

4.  Converter arrangement (13) according to one of the preceding claims,
    **characterized in that**
    the resistance (R) of the second series circuit (200) is such that:

$$0.8 \cdot \frac{1}{j \cdot 2\pi \cdot f_s \cdot C1} < R < 10 \cdot \frac{1}{j \cdot 2\pi \cdot f_s \cdot C1}$$

where R denotes the resistance of the second series circuit (200), C1 denotes the first capacitance and fs denotes the supply frequency.

5.  Converter arrangement (13) according to one of the preceding claims,
    **characterized in that**
    the inductance (L2) of the winding (210) of the second series circuit (200) is between 0.1 and 0.5 times the inductor inductance (L1) of the inductor (110) of the first series circuit (100).

6.  Converter arrangement (13) according to one of the preceding claims,
    **characterized in that**
    the coupling inductance M between the winding (210) of the second series circuit (200) and the inductor (110) of the first series circuit (100) is between 0.1 and 0.7 times the inductance of the winding.

7.  Converter arrangement (13) according to one of the preceding claims,

**characterized in that**
the number of windings of the winding (210) is between 5 and 50.

8. Vehicle, in particular rail vehicle or road vehicle, **characterized in that**
the vehicle has a converter arrangement (13) according to one of the preceding claims.

**Revendications**

1. Dispositif convertisseur (13) comprenant :

- un redresseur (20) qui peut être alimenté avec une tension alternative externe d'une fréquence d'alimentation (fs) prédéterminée,
- un onduleur (30), et
- un circuit intermédiaire (40), qui comprend un condensateur de circuit intermédiaire (41) et est disposé électriquement entre le redresseur (20) et l'onduleur (30), dans lequel
- un circuit absorbant (50) est connecté électriquement en parallèle au condensateur de circuit intermédiaire (41),
- le circuit absorbant (50) forme un circuit résonnant série à une fréquence de résonance série qui correspond au double de la fréquence d'alimentation (fs) et a une basse impédance,
- le circuit absorbant (50) forme, en commun avec le condensateur de circuit intermédiaire (41), un circuit résonnant parallèle à une fréquence de résonance parallèle et a une haute impédance,
- le circuit absorbant (50) est formé par un premier circuit série, qui comprend une bobine (110) et une capacité (C1), désignée ci-après première capacité,
- la bobine (110), la première capacité (C1) et le condensateur de circuit intermédiaire (41) forment le circuit résonnant parallèle,

**caractérisé en ce que** :

- un circuit absorbant atténuateur (60) est connecté électriquement en parallèle au condensateur de circuit intermédiaire (41) et au circuit absorbant (50), lequel circuit absorbant atténuateur comprend une résistance ohmique (R) et est couplé magnétiquement au circuit absorbant (50), et
- la tension chutant au niveau du circuit absorbant (50) à la fréquence de résonance parallèle est transformée par le couplage magnétique avec le circuit absorbant atténuateur (60) et de ce fait, la résistance (R) du circuit absorbant atténuateur (60) atténue la résonance parallèle du circuit absorbant,
- un second circuit série (200) est connecté électriquement en parallèle au condensateur de circuit intermédiaire (41) et au premier circuit série (100), lequel second circuit série forme le circuit absorbant atténuateur (60) et comprend un bobinage (210), une résistance (R) et une capacité, désignée ci-après seconde capacité (C2),
- le bobinage (210) du second circuit série (200) est couplé magnétiquement à la bobine (110) du premier circuit série (100) et
- la tension chutant au niveau de la bobine (110) à la fréquence de résonance parallèle est transformée par le bobinage (200) sur le second circuit série (200).

2. Dispositif convertisseur (13) selon l'une des revendications précédentes, **caractérisé en ce que** la seconde capacité (C2) est de 0,1 fois à dix fois la valeur de la première capacité (C1).

3. Dispositif convertisseur (13) selon l'une des revendications précédentes, **caractérisé en ce que** la seconde capacité (C2) est de 0,5 fois à 1,5 fois la valeur de la première capacité (C1).

4. Dispositif convertisseur (13) selon l'une des revendications précédentes, **caractérisé en ce que** la résistance (R) du second circuit série (200) est calculée selon la formule suivante :

$$0{,}8 \cdot \frac{1}{j \cdot 2\pi \cdot fs \cdot C1} < R < 10 \cdot \frac{1}{j \cdot 2\pi \cdot fs \cdot C1}$$

où R représente la résistance du second circuit série (200), C1 désigne la première capacité et fs désigne la fréquence d'alimentation.

5. Dispositif convertisseur (13) selon l'une des revendications précédentes, **caractérisé en ce que** l'inductance (L2) du bobinage (210) du second circuit série (200) est de 0,1 fois à 0,5 fois l'inductance d'arrêt (L1) de la bobine (110) du premier circuit série (100).

6. Dispositif convertisseur (13) selon l'une des revendications précédentes, **caractérisé en ce que** l'inductance de couplage M entre le bobinage (210) du second circuit série (200) et la bobine (110) du premier circuit série (100) est de 0,1 fois à 0,7 fois l'inductance du bobinage.

7. Dispositif convertisseur (13) selon l'une des revendications précédentes, **caractérisé en ce que** le nombre d'enroulements du bobinage (210) est compris entre 5 et 50.

8. Véhicule, en particulier véhicule ferroviaire ou véhicule routier, **caractérisé en ce que** le véhicule comprend un dispositif convertisseur (13) selon l'une des revendications précédentes.

FIG 1

EP 3 659 247 B1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Analysis and compensation of beat phenomenon for railway traction drive system fed with fluctuating DClink voltage. **BIN GOU et al.** POWER ELECTRONICS AND MOTION CONTROL CONFERENCE (IPEMC), 2012 7TH INTERNATIONAL. IEEE, 02. Juni 2012, 654-659